# EUROPEAN PATENT APPLICATION

(11) **EP 4 478 809 A1**
(43) Date of publication of application: **18.12.2024**
(21) Application number: 22925948.6
(22) Date of filing: 10.02.2022
(51) Int. Cl.: H04W 72/04

(54) **TERMINAL AND BASE STATION**

(71) Applicant: NTT DOCOMO, INC., Tokyo 100-6150 (JP)
(72) Inventor: OKANO, Mayuko, Tokyo 100-6150 (JP); SHIBAIKE, Naoya, Tokyo 100-6150 (JP); HARADA, Hiroki, Tokyo 100-6150 (JP)
(74) Representative: Hoffmann Eitle
(86) International application number: PCT/JP2022/005509
(87) International publication number: WO 2023/152927

(57) **Abstract**

A terminal includes a reception unit configured to receive, from a base station, first information indicating a slot to monitor in a slot group; and a control unit configured, when the reception unit receives second information indicating a duration, to monitor a downlink control channel at a slot indicated by the first information in the duration indicated by the second information.

## Description

### Technical Field

The present invention relates to a terminal and a base station in a radio communication system.

### Background Art

In NR (New Radio) (also referred to as "5G") which is a successor system of LTE (Long Term Evolution), techniques for satisfying requirements such as a large-capacity system, a high-speed data transmission rate, low delay, simultaneous connection of a large number of terminals, low cost, and power saving have been studied. In addition, in NR, the use of high-frequency bands such as 24.25 to 52.6 GHz and 52.6 to 71 GHz is being studied.

In addition, in NR, an operation is defined in which a base station transmits search space configuration information to a terminal, and the terminal monitors a PDCCH based on the configuration information (Non-Patent Documents 1 and 2 and the like).

### Prior Art Document

### Non-Patent Document

Non-Patent Document 1: 3GPP TS 38.213 V15.14.0 (2021-06)
Non-Patent Document 2: 3GPP TS 38.331 V15.15.0 (2021-09)

### SUMMARY OF THE INVENTION

### Problems to be Solved by the Invention

When considering the use of high-frequency bands such as 52.6-71 GHz, it is anticipated that the subcarrier spacing will increase, and the slot length will become shorter. Therefore, from the perspective of terminal capabilities, it is being considered that the terminal will perform PDCCH monitoring in units of multiple slots (slot group) and only within a specific time range within the slot group. Here, PDCCH monitoring using a slot group is referred to as multi-slot PDCCH monitoring.

However, in conventional technology, configuration information considering slot groups is not clearly defined, so the terminal may not be able to perform multi-slot PDCCH monitoring appropriately.

The present invention has been made in view of the above, and an object of the present invention is to provide a technique for a terminal to appropriately monitor a PDCCH in multi-slot PDCCH monitoring.

### Means for Solving the Problems

According to the disclosed technique, there is provided a terminal including:
a reception unit configured to receive, from a base station, first information indicating a slot to monitor in a slot group; and
a control unit configured, when the reception unit receives second information indicating a duration, to monitor a downlink control channel at a slot indicated by the first information in the duration indicated by the second information.

### Effects of the Invention

According to the disclosed technique, in multi-slot PDCCH monitoring, it becomes possible that a terminal appropriately performs PDCCH monitoring.

### Brief Description of the Drawings

[Fig. 1] FIG. 1 is a diagram for explaining a radio communication system according to an embodiment of the present invention;
[Fig. 2] FIG. 2 is a diagram for explaining a radio communication system according to an embodiment of the present invention;
[Fig. 3] FIG. 3 is a diagram showing an example of a band; [Fig. 4] FIG. 4 is a diagram showing an example of a limitation of monitoring;
[Fig. 5] FIG. 5 is a diagram showing an example of a limitation on monitoring;
[Fig. 6] FIG. 6 is a diagram for explaining a monitoring method according to a type of search space;
[Fig. 7] FIG. 7 is a diagram showing an example of configuration information of a search space;
[Fig. 8] FIG. 8 is a diagram for explaining a monitoring method based on configuration information of a search space;
[Fig. 9] FIG. 9 is a diagram for explaining a problem;
[Fig. 10] FIG. 10 is a diagram showing an example of basic operation of first to third embodiments;
[Fig. 11] FIG. 11 is a diagram for explaining a second embodiment;
[Fig. 12] FIG. 12 is a diagram for explaining the second embodiment;
[Fig. 13] FIG. 13 is a diagram for explaining a third embodiment;
[Fig. 14] FIG. 14 is a diagram showing a configuration example of a base station 10;
[Fig. 15] FIG. 15 is a diagram showing a configuration example of a terminal 20.

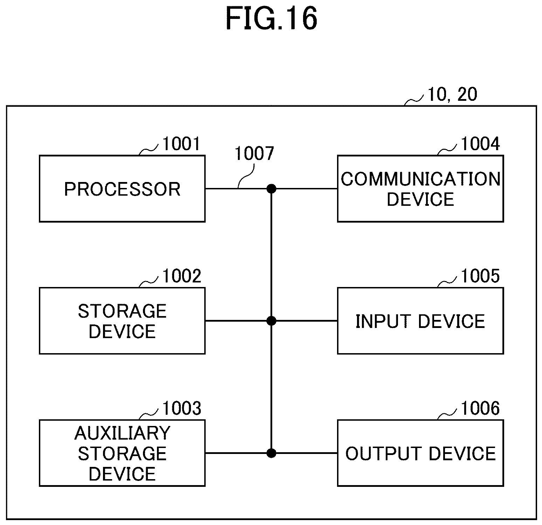

[Fig. 16] FIG. 16 is a diagram showing an example of a hardware configuration of the base station 10 or the terminal 20 according to the embodiment of the present invention; and

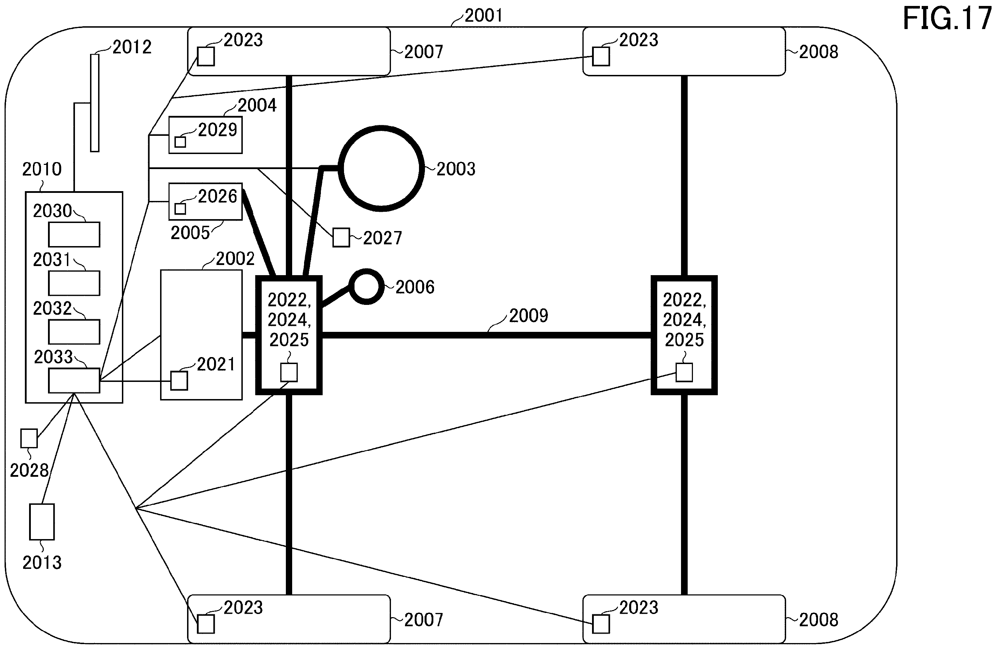

[Fig. 17] FIG. 17 is a diagram showing a configuration example of a vehicle.

### Detailed Description of the Invention

Hereinafter, an embodiment of the present invention will be described with reference to the drawings. The embodiment described below is an example, and the embodiment to which the present invention is applied is not limited to the following embodiment.

In the operation of the radio communication system according to the embodiment of the present invention, existing techniques are used as appropriate. The existing technology is, for example, existing NR (e.g., Non-Patent Documents 1 and 2). The radio communication system (the base station 10 and the terminal 20) according to the present embodiment can basically perform an operation according to an existing technical specification. However, in order to solve the problem where use of the high frequency band is assumed, the base station 10 and the terminal 20 also perform operations that are not included in the existing technical specification. In the description of Examples described later, operations and the like that are not in the existing technical specifications are mainly described. Note that the numerical values described below are all examples.

In the embodiment of the present invention, the duplex scheme may be a time division duplex (TDD) scheme, a frequency division duplex (FDD) scheme, or another scheme (for example, flexible duplex).

In the embodiment of the present invention, "configuring" a radio parameter or the like may mean that a predetermined value is pre-configured or that a radio parameter notified from the base station 10 or the terminal 20 is configured. Note that the notation "A/B" used in the present embodiment means "A or B, or A and B" unless the meaning is clear from the context.

### (System Configuration)

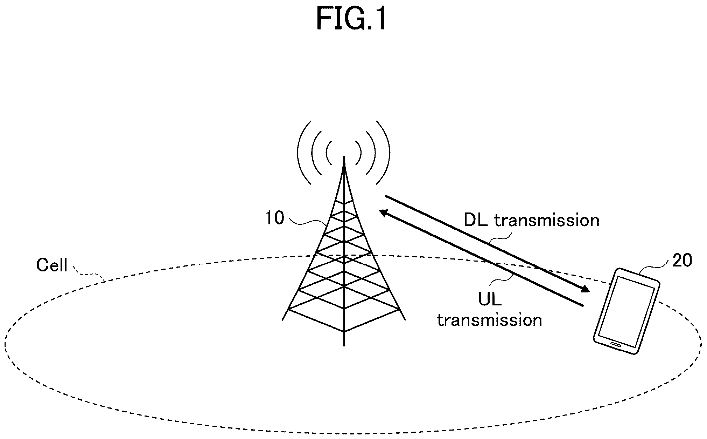

FIG. 1 is a diagram for explaining a radio communication system according to an embodiment of the present invention. As shown in FIG. 1, the radio communication system according to the embodiment of the present invention includes a base station 10 and a terminal 20. Although one base station 10 and one terminal 20 are illustrated in FIG. 1, this is merely an example, and a plurality of base stations 10 and a plurality of terminals 20 may be provided.

The base station 10 is a communication apparatus that provides one or more cells and performs radio communication with the terminal 20. The physical resources of the radio signal are defined in the time domain and the frequency domain.

OFDM is used as a radio access scheme. In the frequency-domain, at least 15 kHz, 30 kHz, 120 kHz, and 240 kHz are supported as subcarrier spacing (SCS). In the present embodiment, a larger SCS may be supported. Further, a resource block is formed with a predetermined number (for example, 12) of consecutive subcarriers regardless of SCS.

When performing initial access to a cell, for example, the terminal 20 detects SSB (SS/PBCH block), and identifies SCS for PDCCH, PDSCH, PUCCH, or the like, for example, based on PBCH included in the SSB.

In the time domain, a slot is formed with a plurality of OFDM symbols (for example, 14 symbols regardless of the subcarrier spacing). Hereinafter, an OFDM symbol is referred to as a "symbol". A slot is a scheduling unit. Further, a subframe of a 1 ms section is defined, and a frame including 10 subframes is defined. The number of symbols per slot is not limited to 14.

As illustrated in FIG. 1, the base station 10 transmits control information or data to the terminal 20 in downlink (DL), and receives control information or data from the terminal 20 in uplink (UL). Both the base station 10 and the terminal 20 can transmit and receive signals by performing beamforming. In addition, both the base station 10 and the terminal 20 can apply communication by multiple input multiple output (MIMO) to DL or UL. In addition, both the base station 10 and the terminal 20 may perform communication via a secondary cell (SCell) and a primary cell (PCell) by carrier aggregation (CA).

The terminal 20 is a communication apparatus having a radio communication function, such as a smartphone, a mobile phone, a tablet, a wearable terminal, and a machine-to-machine (M2M) communication module. As illustrated in FIG. 1, the terminal 20 receives control information or data from the base station 10 in DL and transmits control information or data to the base station 10 in UL, thereby using various communication services provided by the radio communication system.

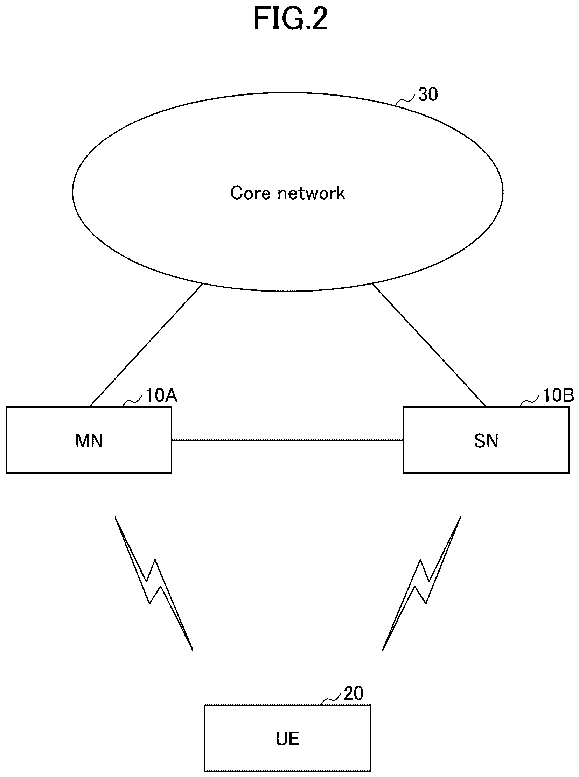

FIG. 2 illustrates a configuration example of a radio communication system in a case where NR-Dual connectivity (NR-DC) is executed. As shown in FIG. 2, the base stations 10A and 10B are provided as a master node (MN) and a secondary node (SN), respectively. The base stations 10A and 10B are connected to a core network. The terminal 20 communicates with both the base stations 10A and 10B.

A cell group provided by the base station 10A serving as the MN is referred to as a master cell group (MCG), and a cell group provided by the base station 10B serving as the SN is referred to as a secondary cell group (SCG). The operation in this embodiment may be performed in either of the configurations shown in FIGS. 1 and 2.

In the radio communication system according to the present embodiment, when an unlicensed band is used, LBT (Listen Before Talk) is executed. The base station 10 or the terminal 20 performs transmission when the LBT result indicates "idle", and does not perform transmission when the LBT result indicates "busy".

### (Frequency Band)

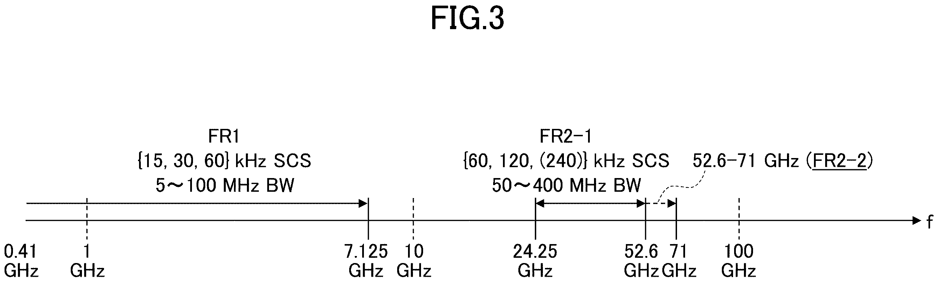

FIG. 3 shows an example of frequency bands used in NR. There are three frequency bands (which may also be referred to as frequency ranges) in NR: FR1 (0.41 GHz to 7.125 GHz), FR2-1 (24.25 GHz to 52.6 GHz), and FR2-2 (52.6 GHz to 71 GHz). Note that FR2-1 and FR2-2 may collectively be referred to as FR2. As shown in FIG. 3, in FR1, SCS of 15 kHz, 30 kHz, and 60 kHz are supported, and a bandwidth (BW) of 5 to 100 MHz is supported. In FR2-1, SCS of 60 kHz, 120 kHz, and 240 kHz (SSB only) are supported, and a bandwidth (BW) of 50 to 400 MHz is supported. In FR2-2, it is anticipated that SCS larger than 240 kHz will be supported. However, these support conditions are merely examples.

The radio communication system according to this embodiment is assumed to utilize not only FR1 but also the frequency bands of FR2-1 and FR2-2.

### (Limitation of UE Capability in PDCCH Monitoring)

In a high-frequency band such as 52.6 GHz to 71 GHz, larger subcarrier spacings (SCS) than those used in the existing FR1/2 are introduced. For example, SCS values of 480 kHz and 960 kHz are introduced.

On the other hand, according to the existing NR technical specifications (Non-Patent Document 1 and the like), due to the limitation of processing capability of the UE, the number of PDCCH candidates to be monitored/the maximum number of "BD/CCE" per slot decreases as the SCS increases.

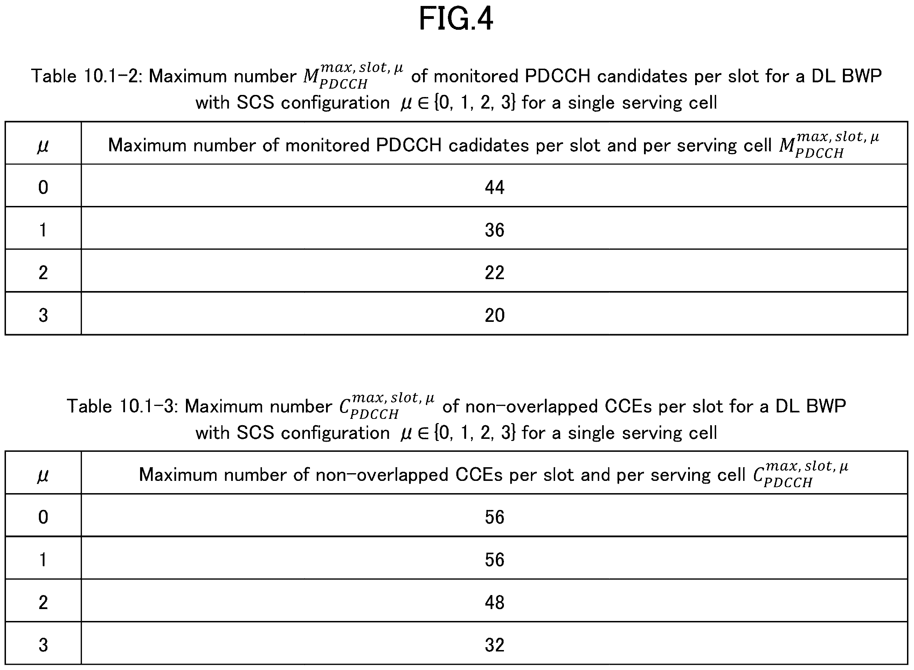

FIG. 4 shows an example of rules extracted from Non-Patent Document 1. Table 10.1-2 indicates the maximum number of PDCCH candidates to monitor per slot, and Table 10. 1-3 indicates the maximum number of CCEs to monitor per slot. As shown in FIG. 4, the larger the SCS represented by the numerology µ, the smaller the number of PDCCH candidates/the number of CCEs.

In such a case, the AL (aggregation level) may be reduced, and thus the reliability may be reduced. In addition, types of DCI formats to be monitored are limited.

### (On Slot Group)

In the present embodiment, it is assumed that a slot group including a plurality of slots (multi-slot) is used. Although it is assumed that the slot group is used in a high frequency band, the slot group may be used in a frequency band other than the high frequency band.

Multi-slot PDCCH monitoring is performed based on slots in a slot group. Each slot group consists of X consecutive slots. A plurality of slot groups are continuously arranged so as not to overlap each other. The start of the first slot group in a subframe is aligned with the subframe boundary. Also, the start of each slot group is aligned with a slot boundary. In addition, a BD budget common to all search spaces exists.

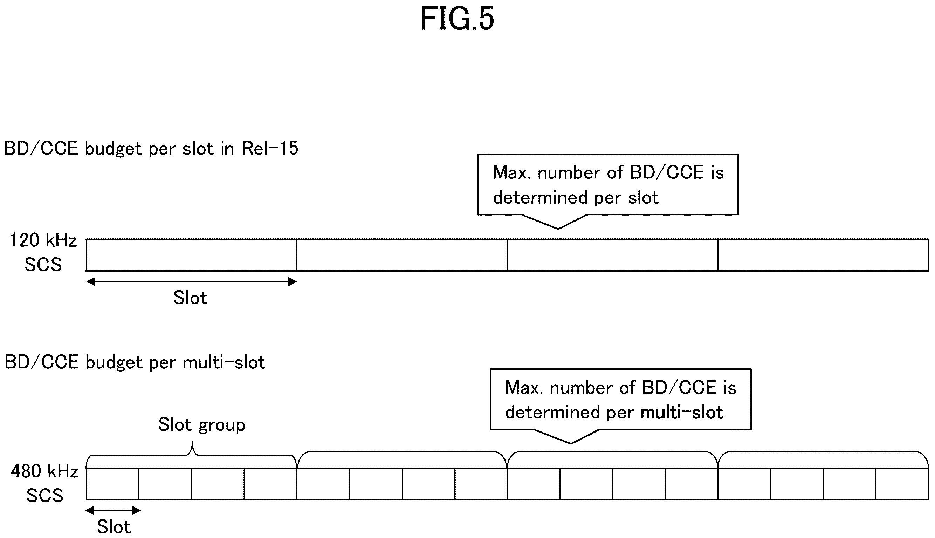

FIG. 5 shows a method of determining a BD/CCE budget (the maximum number of BDs/CCEs) in the case of 120kHz SCS and a method of determining a BD/CCE budget (the maximum numbers of BDs/CCEs) in the case of 480kHz SCS in the existing technology (Rel-15). As shown in FIG. 5, in Rel-15, the maximum number of BDs/CCEs is determined for each slot, and in 480kHz SCS, the maximum number of BDs/CCEs is determined for each multi-slot constituting a slot group.

When the terminal 20 supports, for example, SCS=480 kHz, it reports to the base station 10 the maximum number of supported BDs/CCEs for X=4 slots. Similarly, when the terminal 20 supports SCS=960 kHz, it reports to the base station 10 the maximum number of supported BDs/CCEs for X=8 slots.

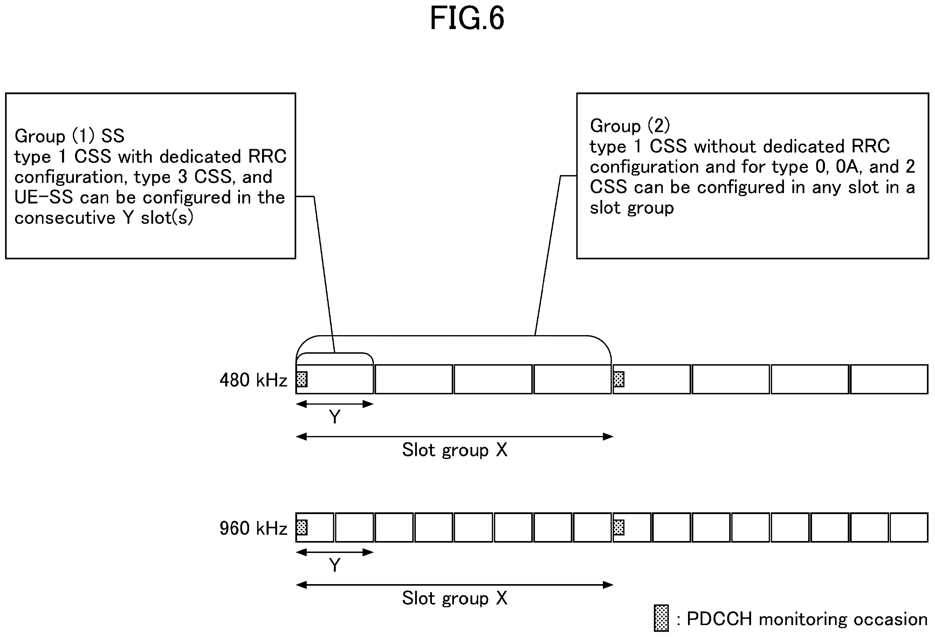

In the multi-slot PDCCH monitoring of the 480/960kHz SCS according to the present embodiment, slots that can be configured for the PDCCH monitoring may be different depending on a type (kind) of a search space (which may be referred to as SS). An example will be described with reference to FIG. 6.

As illustrated in FIG. 6, in the SS of group (1), Y consecutive slots can be configured in the terminal 20 as slots for PDCCH monitoring. In FIG. 6, Y is the first one slot in slot group X. The positions of the consecutive Y slots in the slot group are fixed. In the SS of group (2), an arbitrary slot in the slot group can be configured in the terminal 20 as a slot for PDCCH monitoring.

Here, the SSs of the group (1) are type 1 CSS, type 3 CSS, and UE-SS according to a dedicated RRC configuration. The SSs of the group (2) are type 1 CSS, type 0 CSS, type 0A CSSs, and type 2 CSS without dedicated RRC configuration.

Regarding the combination (X, Y) of the numbers of slots X and Y of the slot group, the terminal 20 having a capability of multi-slot monitoring supports, for example, "For SCS 480 kHz: (X, Y)=(4, 1)" and "For SCS 960 kHz: (X, Y)=(8, 1)". The terminal 20 having the capability of multi-slot monitoring may support, for example, "For SCS 480 kHz: (X, Y) =(4, 2)" and "For SCS 960 kHz: (X, Y)=(8, 4), (4, 2), and (4, 1)".

In the above example, the unit of X and the unit of Y are slots, but the unit of X and the unit of Y may be symbols or a combination of symbols and slots. When the unit of X is a symbol, the group indicated by X may be referred to as a symbol group. The "slot group" described in the present embodiment may be replaced with the "symbol group".

As information included in search space configuration information (RRC parameters), there are periodicity, offset, and duration. The terminal 20 that has received the configuration information from the base station 10 monitors a PDCCH in accordance with the cycle, the offset, and the period specified in the configuration information.

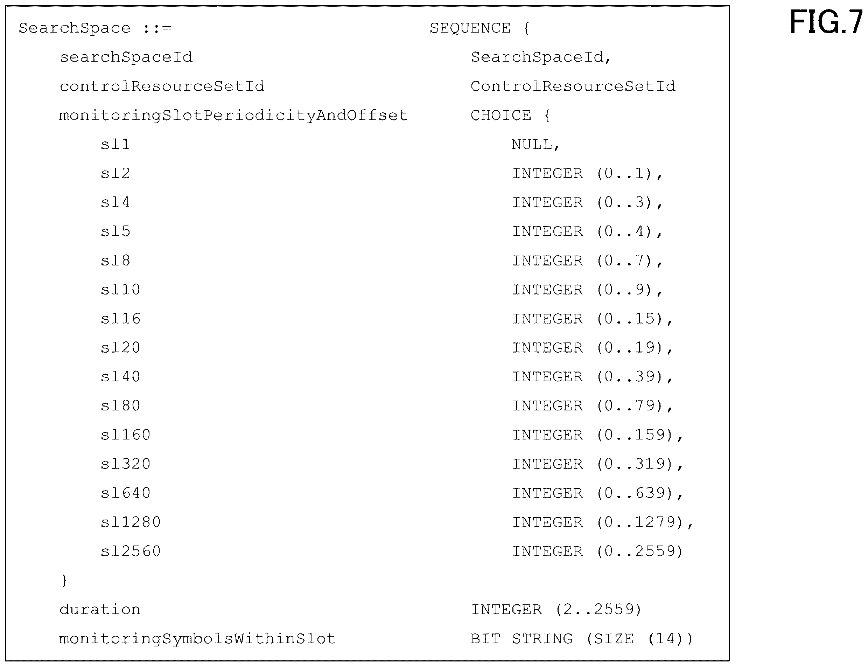

FIG. 7 shows an example of configuration information of a search space in the existing 3GPP TS38.331. In the existing 3GPP TS38.331, monitoringSlotPeriodicityAndOffset is an information element that specifies periodicity and offset, and duration is the number of consecutive slots in which a search space (SearchSpace) continues in each period.

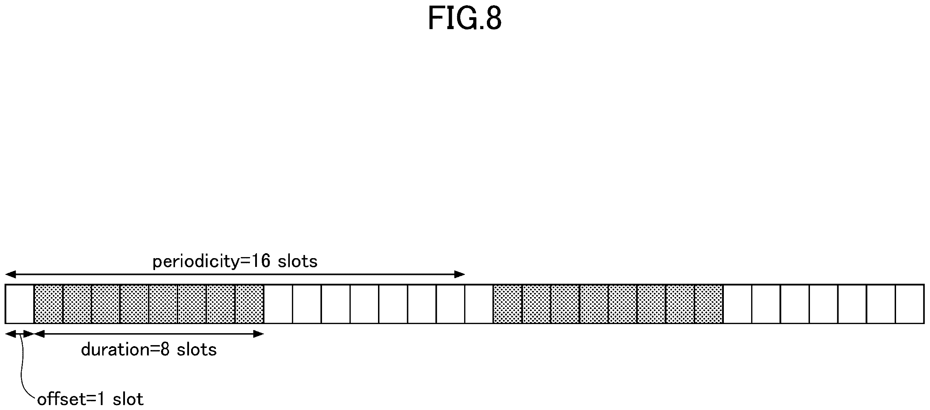

FIG. 8 illustrates an example of a monitoring operation of the terminal 20 in a case where the configuration information is "periodicity = 16 slots, offset = 1 slot, duration = 8 slots". In the plurality of slots illustrated in FIG. 8, one slot at the start of the period is the offset, and the terminal 20 monitors a PDCCH in the subsequent duration (period) (shaded slots).

Note that the terminal 20 may perform monitoring only on a part of all the symbols constituting a slot in each slot to be monitored. The part of symbols may be designated by monitoringSymbolsWithinSlot, monitoringSlotsWithinSlotGroup-r17, or CORESET. The same applies to first to third embodiments described later.

In the present embodiment, for example, monitoringPeriodicityAndOffset-r17 and duration-r17 are used as new information elements for configuring the search space for multi-slot PDCCH monitoring. In the present embodiment, the existing information element described above may be used together with the new information element. In the following description, "duration" indicates an existing RRC parameter, and duration indicates a period.

For monitoringPeriodicityAndOffset-r17, the value represents slots. In addition, values {32,64,128,5120,10240,20480} of periodicity are added to the existing monitoringSlotPeriodicityAndOffset, and the list becomes {1,2,4,5,8,10,16,20,32,40,64,80,128,160,320,640,1280,2560, 5120,10240,20480}.

For each periodicity value Xp, the range of values for the offset O is {0... Xp-1} slots. The periodicity configured for at least the SS of the group (1) may be limited to an integer multiple of Xs slots. Xs is the number of slots in one slot group.

For duration-r17, its value represents slots, and a value range is {8, 12, ..., 20476}. Note that {8, 12, , 20476} is the range in the existing technique.

The duration configured for at least the SS of group (1) may be limited to an integer multiple of Xs slots.

Further, the existing monitoringSymbolsWithinSlot may be applied to each slot of a slot group in multi-slot PDCCH monitoring. A new parameter monitoringSlotsWithinSlotGroup-r17 may also be introduced. The monitoringSymbolsWithinSlot indicates a slot to be monitored in the slot group.

The size of the monitoringSlotsWithinSlotGroup-r17 is, for example, 8 bits, and each bit of the monitoringSlotsWithinSlotGroup-r17 represents each slot in the slot group. For example, if the value of bit is 1, the corresponding slot is configured for multi-slot PDCCH monitoring. At least for the SS in group (1), the slots indicated by a bitmap of the monitoringSlotsWithinSlotGroup-r17 bitmap may be consecutive.

The techniques described above are currently agreed upon techniques. In the present embodiment, the above-described techniques may be applied together with a novel technique described below.

### (About problem)

The following points (1), (2) and (3) are unclear for the above-mentioned currently agreed techniques.

(1) Candidate values of offsets for group (1) SS and group (2) SS
(2) Definition of duration-r17

Specifically, for example, the following points are unclear.

- Candidate values of duration for group (1) SS and group (2) SS
- Value to be applied in the absence of this parameter

### (3) Definition of monitoringSlotsWithinSlotGroup-r17

In particular, for example, it is unclear to which slot/to which slot group monitoringSlotsWithinSlotGroup-r17 should be applied.

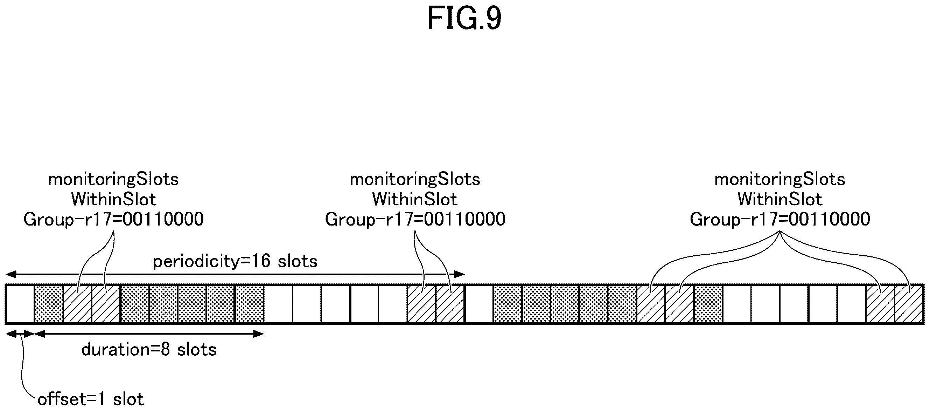

An example is shown in FIG. 9. FIG. 9 shows an example in which configuration information of a search space is "periodicity=16 slots, offset=1 slot, duration=8 slots, monitoringSlotsWithinSlotGroup-r17=00110000". FIG. 9 shows an example in which one slot group includes four slots. As an example, as illustrated in this figure, each parameter is associated with a slot, but it is not clear in which slot the terminal 20 should perform PDCCH monitoring. For example, it is not clear whether monitoring is performed in the dark-shaded slots or in the light-shaded slots in FIG. 9.

As described above, in the existing technology, it is not clear in which slot the terminal 20 should perform PDCCH monitoring, and thus there is a problem that the terminal 20 may not appropriately perform monitoring in multi-slot PDCCH monitoring.

### (Outline of Embodiment)

In the present embodiment, a technique will be described which solves the above-described problem and enables the terminal 20 to appropriately perform multi-slot PDCCH monitoring. To be more specific, signaling for appropriately configuring a search space (or a search space set) so that the terminal 20 appropriately performs multi-slot PDCCH monitoring in, for example, FR2-2 will be described.

The basic operation, the first embodiment, the second embodiment, and the third embodiment will be described below as more detailed examples. The outline of the first, second, and third embodiments is as follows. The first to third embodiments can be implemented in any combination.

In the first embodiment, an example of candidate values of offsets in the SS of the group (1) and the SS of the group (2) will be described. In the second embodiment, the definition of the duration-r17 and the like will be described. In the third embodiment, the definition of monitoringSlotsWithinSlotGroup-r17 will be described.

In the following, as an example, specific parameters that are monitoringSlotPeriodicityAndOffset-r17, duration-r17, monitoringSlotsWithinSlotGroup-r17 and the like are used, but these are examples. The technique according to the present invention can be applied to any information not limited to monitoringSlotPeriodicityAndOffset-r17, duration-r17, monitoringSlotsWithinSlotGroup-r17 and the like.

In the following description, it is assumed that multi-slot PDCCH monitoring using a slot group is performed.

### (Basic Operation Example)

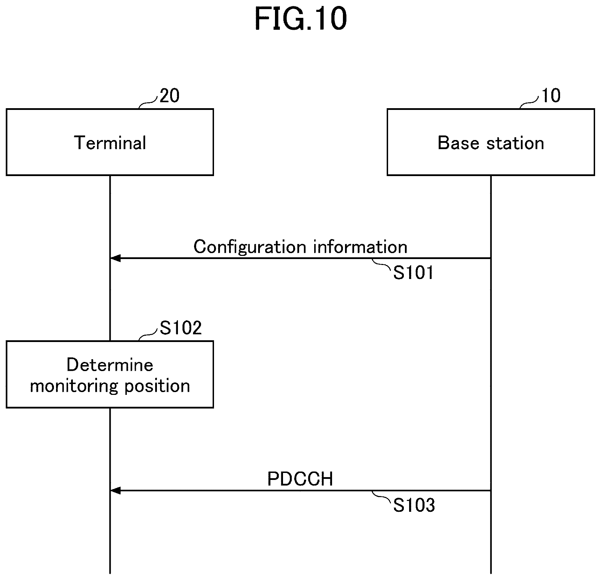

A basic operation example applied to any of the first to third embodiments will be described with reference to FIG. 10. In S101, the terminal 20 receives configuration information of a search space from the base station 10. The configuration information includes, for example, monitoringSlotPeriodicityAndOffset-r17, duration-r17, monitoringSlotsWithinSlotGroup-r17 and the like.

The configuration information of S101 is notified by RRC signaling. However, the notification of S101 is not limited to RRC, and may be performed by, for example, MAC CE or DCI. Also, information reported in the MAC CE or the DCI may be referred to as "instruction information".

In addition, in S101, after the configuration information (including a plurality of pieces of configuration information) of the search space is notified from the base station 10 to the terminal 20 by RRC, specific configuration information may be activated from the base station 10 to the terminal 20 by MAC CE or DCI. The terminal 20 uses the activated configuration information.

In addition, in S101, after the configuration information of the search space is notified from the base station 10 to the terminal 20 by RRC, the configuration information may be changed from the base station 10 to the terminal 20 by MAC CE or DCI. The terminal 20 uses the changed configuration information.

The target configuration information in the example of the activation and the change may be any one of the periodicity and the offset (monitoringSlotPeriodicityAndOffset-r17), the duration (duration-r17), and the information of the slot to be monitored (monitoringSlotsWithinSlotGroup-r17), or may be other than these.

In S102, the terminal 20 determines a monitoring position (a slot in the present embodiment) of a PDCCH based on the configuration information received in S101, and monitors the PDCCH in the slot in S103.

### (First Embodiment)

Next, the first embodiment will be described. In the first embodiment, an example of a set of candidate values of the offset given by the monitoringSlotPeriodicityAndOffset-r17 notified from the base station 10 to the terminal 20 in S101 of FIG. 10 will be described.

### <SS Type>

In the first embodiment, a value that can be used as the offset may be different depending on the type of the search space.

For example, for the SS in group (1), the configured offset may be an integer multiple of Xs, and for the SS of group (2), all values included in the candidate value set may be usable. Here, Xs is the number of slots in one slot group.

For example, when the base station 10 performs configuration of the SS of group (1), the base station 10 transmits configuration information including an offset that is a value of an integer multiple of Xs. When the base station 10 performs configuration of the SS of group (2), the base station 10 transmits configuration information including an offset that is an arbitrary value included in a defined candidate value set.

Note that, as for identification of which type of search space is configured, for example, information indicating the search space type may be included in the configuration information notified from the base station 10 to the terminal 20 in S101 of FIG. 10, and the terminal 20 may identify the search space type by the information.

### <About Maximum Value>

The maximum valid value of the offset may be (periodicity-M), i.e., a value obtained by subtracting M from periodicity. The periodicity is, for example, a periodicity configured by monitoringSlotPeriodicityAndOffset-r17. The value of M indicates the number of slots and may be different depending on SCS. For example, when the SCS is 480 kHz, M=4, and when the SCS is 960 kHz, M=8.

M may be different depending on the type of search space. For example, M= Xs may be applied to the SS of group (1), and M=1 may be applied to the SS of group (2).

### <Other Examples of First Embodiment>

When the configuration information notified from the base station 10 to the terminal 20 in S101 of FIG. 10 does not include a field of monitoringSlotPeriodicityAndOffset-r17, monitoringSlotPeriodicityAndOffset may be applied.

That is, in this example, the configuration information notified from the base station 10 to the terminal 20 in S101 in FIG. 10 includes the monitoringSlotPeriodicityAndOffset, but may or may not include the monitoringSlotPeriodicityAndOffset-r17. When confirming that the configuration information does not include monitoringSlotPeriodicityAndOffset-r17, the terminal 20 determines to apply monitoringSlotPeriodicityAndOffset. When the terminal 20 confirms that the configuration information includes monitoringSlotPeriodicityAndOffset-r17, the terminal 20 determines to apply monitoringSlotPeriodicityAndOffset-r17.

In addition, the terminal 20 may ignore monitoringSlotPeriodicityAndOffset-r17 for the SS of group (2) even when monitoringSlotPeriodicityAndOffset-r17 is included in the configuration information.

When the terminal 20 ignores monitoringSlotPeriodicityAndOffset-r17 for the SS of group (2), the terminal 20 may apply values configured by the existing parameter monitoringSlotPeriodicityAndOffset as a periodicity and an offset for the SS of group (2).

According to the first embodiment, the terminal 20 can perform multi-slot PDCCH monitoring by applying an appropriate offset.

### (Second Embodiment)

Next, a second embodiment will be described. The second embodiment is an embodiment of duration-r17. First, the definition of the duration-r17 will be described. Since there are definitions of Alt. 1 and Alt. 2 for the duration-r17, each of them will be described.

### <Definition of duration-r17: Alt.1>

In Alt. 1, the duration-r17 represents the number of consecutive slots to which the monitoringSlotsWithinSlotGroup-r17 is applied or the number of consecutive slot groups to which the monitoringSlotsWithinSlotGroup r17 is applied in every occasion. Each occasion of every occasion is an occasion that arrives at a periodicity given by the monitoringSlotsWithinSlotGroup-r17.

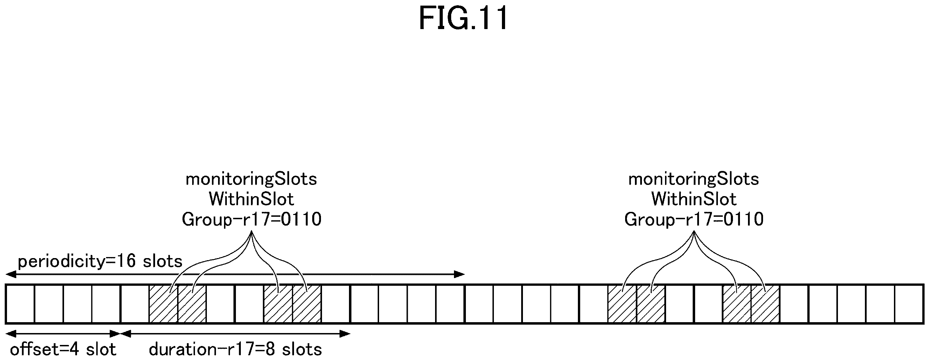

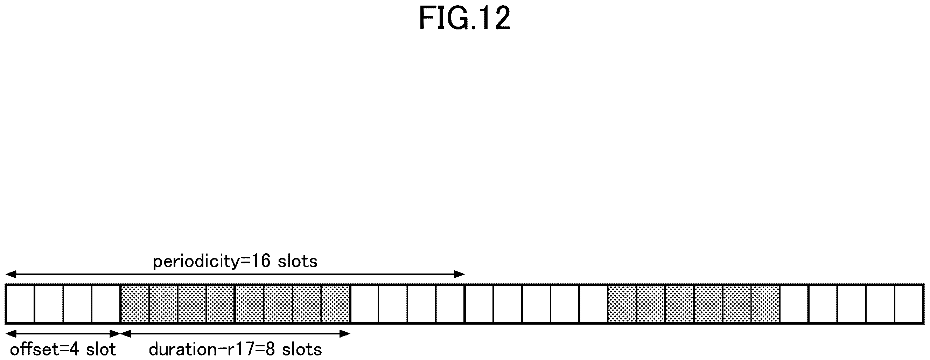

An example of a case where the configuration information is "periodicity=16 slots, offset=4 slots, duration-r17=8 slots, monitoringSlotsWithinSlotGroup-r17=0110" will be described with reference to FIG. 11. In FIG. 11 and FIG. 12 described later, the number of slots in one slot group is four.

The first 16 slots of the plurality of consecutive slots shown in FIG. 11 represent one periodicity, and such a periodicity is repeated. The first 4 slots represent an offset, and 8 slots of the duration-r17 start immediately after the offset. Here, the duration-r17 represents the number of consecutive slots to which the monitoringSlotsWithinSlotGroup-r17 is applied.

According to the above definition, monitoringSlotsWithinSlotGroup-r17=0110 is applied in the 8 slots of duration-r17. In this example, monitoringSlotsWithinSlotGroup-r17=0110 is applied to the first 4 slots and the latter 4 slots of the 8 slots of duration-r17 respectively. Since the "1" in 0110 indicates the slot where PDCCH monitoring is performed, the terminal 20 performs PDCCH monitoring in the shaded slots in Fig. 11.

The base station 10 also applies monitoringSlotsWithinSlotGroup-r17=0110 in the 8 slots of duration-r17. In other words, the base station 10 decides to transmit a PDCCH in the shaded slots in FIG. 11. Note that the base station 10 may transmit the PDCCH (downlink control channel) in some of the shaded slots in FIG. 11.

### <Definition of duration-r17: Alt.2>

In Alt.2, duration-r17 represents the number of consecutive slots during which a SearchSpace continues, or the number of consecutive slot groups during which the SearchSpace continues, in each monitoring occasion (every occasion). Each monitoring occasion (every occasion) refers to a monitoring occasion that occurs at a periodicity as given by monitoringSlotPeriodicityAndOffset-r17.

An example of a case where the configuration information is "periodicity=16 slots, offset=4 slots, duration-r17 = 8 slots" will be described with reference to FIG. 12.

The first 16 slots of the plurality of consecutive slots shown in FIG. 12 represent one periodicity, and such a periodicity is repeated. The first 4 slots represent an offset, and 8 slots of the duration-r17 start immediately after the offset.

As defined above, a search space continues in 8 slots of the duration-r17, and thus the terminal 20 performs PDCCH monitoring in the shaded slots in FIG. 12.

### <Definition of duration-r17: Others>

The definition of the duration-r17 may be different depending on the type of search space (or search space set). For example, Alt. 1 may be applied to the SS of group (1), and Alt. 2 may be applied to the SS of group (2).

### <Set of Candidate Values of Duration-r17>

Next, an example of a set of candidate values of the duration-r17 will be described. As the candidate value of the duration-r17, a set of candidate values of the duration-r17 may be obtained by adding a new value to the existing candidate values of the "duration". For example, a set of candidate values of the duration-r17 may be {2,3,4,···,20476}. Here, 2,3,4 are new values added to the existing candidate values of "duration".

For example, the base station 10 notifies the terminal 20 of a value selected from a set of candidate values of the duration-r17 as a value of the duration-r17.

### <Set of candidate values of duration-r17: about SS type>

The value that can be used as the duration-r17 may vary depending on the type of a search space.

For example, the configured duration-r17 may be limited to an integer multiple of Xs for the SS of group (1), and all values included in the candidate value set may be usable for the SS of group (2). Here, Xs is the number of slots in one slot group.

For example, when configuring the SS of group (1), the base station 10 transmits configuration information including the duration-r17, which is a value of an integer multiple of Xs. When configuring the SS of group (2), the base station 10 transmits configuration information including the duration-r17, which is an arbitrary value included in the defined candidate value set.

### <Set of candidate values of duration-r17: about maximum value>

The maximum valid value of the duration-r17 may be (periodicity- M), that is, a value obtained by subtracting M from the periodicity. The periodicity is, for example, a periodicity configured by monitoringSlotPeriodicityAndOffset-r17. The value of M may be Xs (the number of slots in one slot group).

Also, the value of M may vary depending on SCS. For example, when SCS is 480 kHz, M=4, and when SCS is 960 kHz, M=8.

M may vary depending on the type of search space. For example, M=Xs may be applied to the SS of group (1), and M=1 may be applied to the SS of group (2).

### <Other examples of second embodiment>

When the configuration information notified from the base station 10 to the terminal 20 in S101 of FIG. 10 does not include the field of duration-r17, the terminal 20 may apply N (N slots) as the duration.

N is, for example, Xs (the number of slots in one slot group). There are three options for what value Xs is.

Opt. 1 : Xs is a value reported by UE capability signaling.

Opt. 2 : Xs is a value indicated by the base station 10.

Opt. 3 : Xs is a value implicitly indicated by a configuration of SS and UE capability.

Further, N may be 4 regardless of SCS. N may vary depending on SCS. For example, when SCS is 480 kHz, N=4, and when SCS is 960 kHz, N=8.

N may be 1 regardless of the type of SS. Further, N may vary depending on the type of SS. For example, N=Xs may be applied to the SS of group (1), and N=1 may be applied to the SS of group (2).

In addition, the terminal 20 may ignore the duration-r17 for the SS of group (2) even when the duration-r17 is included in the configuration information.

When the terminal 20 ignores the duration-r17 for the SS of group (2), the terminal 20 may apply a value configured by the existing parameter "duration" as a duration for the SS of group (2).

According to the second embodiment, the terminal 20 can perform multi-slot PDCCH monitoring by applying an appropriate duration.

### (Third Embodiment)

Next, a third embodiment will be described. In the third embodiment, the definition of monitoringSlotsWithinSlotGroup-17 will be described.

In the third embodiment, the monitoringSlotsWithinSlotGroup-17 is a slot (one or more slots) to which a SearchSpace is applied in a slot group for multi-slot PDCCH monitoring.

The monitoringSlotsWithinSlotGroup-17 is applied to a slot (slot (s)) or a slot group (slot group (s)) for which duration-r17 is configured.

For example, when the monitoringSlotsWithinSlotGroup-17 is a bitmap having a K-bit length (K is, for example, 8), the terminal 20 may use only a part of the bitmap having a K-bit length in accordance with the number of slots Xs constituting one slot group. For example, when Xs<K, only a part of the bitmap of the K-bit length may be used.

For example, when K=8 and Xs = 4, the terminal 20 uses the upper 4 bits (MSB 4 bits) or the lower 4 bits (LSB 4 bits) of the 8-bit bitmap. In addition, when Xs=8, the terminal 20 may use the entire bitmap having the 8-bit length. The terminal 20 may ignore the monitoringSlotsWithinSlotGroup-17 for the SS of group (2).

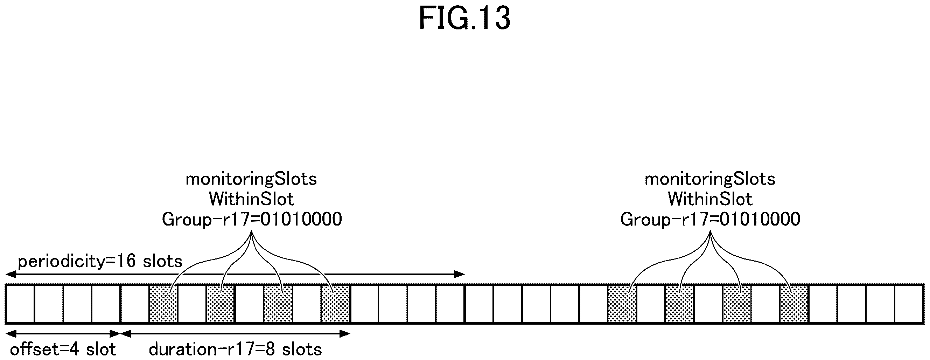

An example of a case where the configuration information is "periodicity=16 slots, offset=4 slots, duration-r17=8 slots, monitoringSlotsWithinSlotGroup-r17=01010000" will be described with reference to FIG. 13. In FIG. 13, the number of slots in one slot group is 4. The terminal 20 uses the upper 4 bits (MSB 4 bits) of the 8-bit bitmap.

The first 16 slots of the plurality of consecutive slots shown in FIG. 13 represent one periodicity, and such a periodicity is repeated. The first 4 slots are an offset, and 8 slots of the duration-r17 start immediately after the offset.

According to the above definition, monitoringSlotsWithinSlotGroup-r17=01010000 is applied in the 8 slots of duration-r17. In this example, the MSB 4 bits 0101 of monitoringSlotsWithinSlotGroup-r17=01010000 are applied to each of the first 4 slots and the latter 4 slots of duration-r17 (8 slots). Since the "1" in 0101 indicates a slot where a search space is present, meaning a slot where PDCCH monitoring is performed, the terminal 20 performs PDCCH monitoring in the shaded slots in FIG. 13.

According to the third embodiment, the terminal 20 can appropriately determine a slot to be monitored.

### (Other examples and variations)

Here, an example commonly applied to the present embodiments (first to third embodiments) will be described.

The proposed contents described in the first to third embodiments may be arbitrarily combined and implemented. Further, whether or not the proposed contents described in the first to third embodiments are applied may be determined according to SCS. For example, the proposed contents described in the first to third embodiments may be applied only to a specific SCS (e.g., an SCS of 480 kHz or higher).

Furthermore, the proposed contents described in the first to third embodiments may be applied depending on the frequency range. For example, the proposed contents described in the first to third embodiments may be applied only to a specific frequency range (e.g., FR2-2). Additionally, the proposals described in the first to third embodiments may be applied to a licensed band, an unlicensed band, or both.

The proposed contents described in the first to third embodiments may be applied based on signaling of capability information (UE capability) from the terminal 20 to the base station 10. For example, when the base station 10 determines that the terminal 10 has the capability of any of the proposed contents described in the first to third embodiments, the proposed contents may be applied.

### (Apparatus Configuration)

Next, functional configuration examples of the base station 10 and the terminal 20 that execute the processes and operations described above will be described.

### <Base station 10>

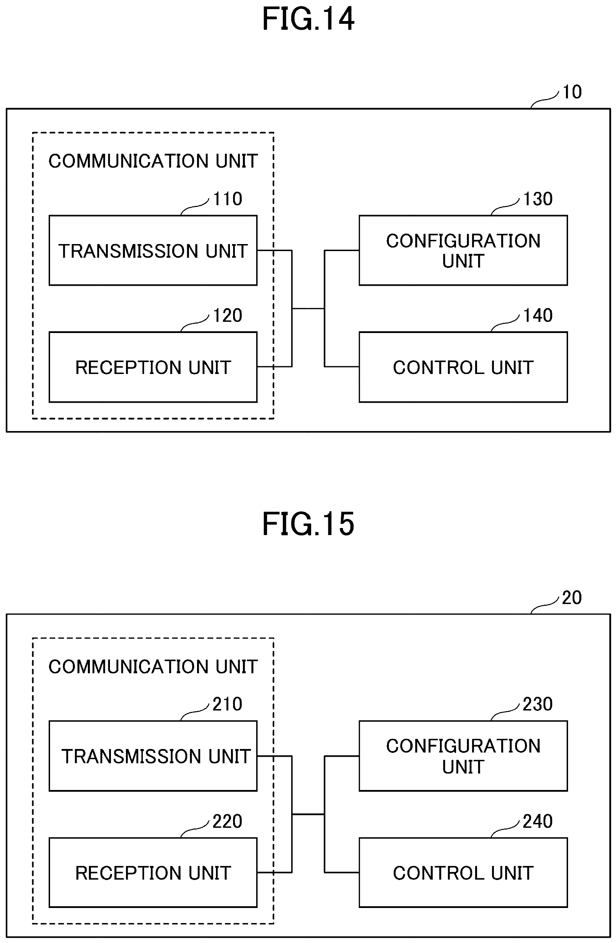

FIG. 14 is a diagram illustrating an example of a functional configuration of the base station 10. As illustrated in FIG. 14, the base station 10 includes a transmission unit 110, a reception unit 120, a configuration unit 130, and a control unit 140. The functional configuration shown in FIG. 14 is merely an example. The functional sections and the names of the functional units may be any as long as the operations according to the embodiment of the present invention can be executed. The transmission unit 110 and the reception unit 120 may be collectively referred to as a communication unit.

The transmission unit 110 includes a function of generating a signal to be transmitted to the terminal 20 side and transmitting the signal by radio. The reception unit 120 includes a function of receiving various signals transmitted from the terminal 20 and acquiring, for example, information of a higher layer from the received signal. The transmission unit 110 has a function of transmitting NR-PSS, NR-SSS, NR-PBCH, DL/UL control signal, DCI by PDCCH, data by PDSCH, and the like to the terminal 20.

The configuration unit 130 stores configuration information set in advance and various kinds of configuration information to be transmitted to the terminal 20 in a storage device included in the configuration unit 130, and reads the configuration information from the storage device as necessary.

The control unit 140 performs scheduling of DL reception or UL transmission of the terminal 20 via the transmission unit 110. The control unit 140 also includes a function of performing LBT. The functional unit related to signal transmission in the control unit 140 may be included in the transmission unit 110, and the functional unit related to signal reception in the control unit 140 may be included in the reception unit 120. The transmission unit 110 may be referred to as a transmitter, and the reception unit 120 may be referred to as a receiver.

### <Terminal 20>

FIG. 15 is a diagram illustrating an example of a functional configuration of the terminal 20. As illustrated in FIG. 15, the terminal 20 includes a transmission unit 210, a reception unit 220, a configuration unit 230, and a control unit 240. The functional configuration shown in FIG. 15 is merely an example. The functional sections and the names of the functional units may be any as long as the operations according to the embodiment of the present invention can be executed. The transmission unit 210 and the reception unit 220 may be collectively referred to as a communication unit.

The transmission unit 210 creates a transmission signal from the transmission data and transmits the transmission signal by radio. The reception unit 220 receives various signals by radio and acquires a signal of a higher layer from the received signal of the physical layer. Also, the reception unit 220 has a function of receiving NR-PSS, NR-SSS, NR-PBCH, DL/UL/SL control signal, DCI by PDCCH, data by PDSCH and so on, transmitted from the base station 10. For example, the transmission unit 210 may transmit a physical sidelink control channel (PSCCH), a physical sidelink shared channel (PSSCH), a physical sidelink discovery channel (PSDCH), a physical sidelink broadcast channel (PSBCH), or the like to other terminals 20 as D2D communication, and the reception unit 120 may receive the PSCCH, the PSSCH, the PSDCH, the PSBCH, or the like from other terminals 20.

The configuration unit 230 stores various types of configuration information received from the base station 10 or another terminal by the reception unit 220 in a storage device included in the configuration unit 230, and reads the configuration information from the storage device as necessary. The configuration unit 230 also stores configuration information set in advance.

The control unit 240 controls the terminal 20. The functional unit related to signal transmission in the control unit 240 may be included in the transmission unit 210, and the functional unit related to signal reception in the control unit 240 may be included in the reception unit 220. The transmission unit 210 may be referred to as a transmitter, and the reception unit 220 may be referred to as a receiver.

### <Supplementary Notes>

According to the present embodiment, at least a terminal and a base station described in items 1 to 6 below are provided.

### (Item 1)

A terminal including:
a reception unit configured to receive, from a base station, first information indicating a slot to monitor in a slot group; and
a control unit configured, when receiving second information indicating a duration by the reception unit, to monitor a downlink control channel at a slot indicated by the first information in a duration indicated by the second information.

### (Item 2)

The terminal as described in item 1,
wherein the duration varies depending on a type of a search space configured to the terminal.

### (Item 3)

The terminal as described in item 1 or 2,
wherein, when the reception unit does not receive the second information, the control unit applies, as the duration, a time length of a number of slots constituting the slot group.

### (Item 4)

The terminal as described in any one of items 1 to 3,
wherein the first information indicates a slot to which a search space is applied in the slot group.

### (Item 5)

The terminal as described in any one of items 1 to 4,
wherein the first information is a bitmap of a bit length, and wherein, when a number of slots in the slot group is smaller than the bit length, the control unit uses a part of the bitmap.

### (Item 6)

A base station including:
a transmission unit configured to transmit first information indicating a slot for a terminal to monitor in a slot group, and second information indicating a duration; and
a control unit configured to determine transmitting a downlink control channel at a slot indicated by the first information in a duration indicated by the second information.

According to any of items 1-6, in multi-slot PDCCH monitoring, it becomes possible that a terminal can appropriately perform PDCCH monitoring. According to item 2, it is possible to perform appropriate monitoring according to the type of search space. According to item 3, the operation in the case where the second information is not received becomes clear. According to item 4, the definition of the first information is clarified.

### (Hardware Configuration)

The block diagrams (FIGS. 14 and 15) used in the description of the embodiment described above illustrate the block of functional units. Such functional blocks (configuration parts) are attained by at least one arbitrary combination of hardware and software. In addition, an attainment method of each of the function blocks is not particularly limited. That is, each of the function blocks may be attained by using one apparatus that is physically or logically coupled, by directly or indirectly (for example, in a wired manner, over the radio, or the like) connecting two or more apparatuses that are physically or logically separated and by using such a plurality of apparatuses. The function block may be attained by combining one apparatus described above or a plurality of apparatuses described above with software.

The function includes determining, judging, calculating, computing, processing, deriving, investigating, looking up, ascertaining, receiving, transmitting, output, accessing, resolving, selecting, choosing, establishing, comparing, assuming, expecting, presuming, broadcasting, notifying, communicating, forwarding, configuring, reconfiguring, allocating (mapping), assigning, and the like, but is not limited thereto. For example, a function block (a configuration part) that functions to transmit is referred to as the transmitting unit or the transmitter. As described above, the attainment method thereof is not particularly limited.

For example, the base station 10, the terminal 20 and the like in one embodiment of this disclosure may function as a computer for performing the processing of a radio communication method of this disclosure. FIG. 14 is a diagram illustrating an example of a hardware configuration of the base station 10 and the terminal 20 according to one embodiment of this disclosure. The base station 10 and the terminal 20 described above may be physically configured as a computer apparatus including a processor 1001, a storage device 1002, an auxiliary storage device 1003, a communication device 1004, an input device 1005, an output device 1006, a bus 1007, and the like.

Note that, in the following description, the word "apparatus" can be replaced with a circuit, a device, a unit, or the like. The hardware configuration of the base station 10 and the terminal 20 may be configured to include one or a plurality of apparatuses illustrated in the drawings, or may be configured not to include a part of the apparatuses.

Each function of the base station 10 and the terminal 20 is attained by reading predetermined software (a program) on hardware such as the processor 1001 and the storage device 1002 such that the processor 1001 performs an operation, and by controlling the communication of the communication device 1004 or by controlling at least one of reading and writing of data in the storage device 1002 and the auxiliary storage device 1003.

The processor 1001, for example, controls the entire computer by operating an operating system. The processor 1001 may be configured by a central processing unit (CPU) including an interface with respect to the peripheral equipment, a control apparatus, an operation apparatus, a register, and the like. For example, the control unit 140, the control unit 240, or the like, described above, may be attained by the processor 1001.

In addition, the processor 1001 reads out a program (a program code), a software module, data, and the like to the storage device 1002 from at least one of the auxiliary storage device 1003 and the communication device 1004, and thus, executes various processing. A program for allowing a computer to execute at least a part of the operation described in the embodiment described above is used as the program. The control unit 140 of the base station 10 shown in FIG. 14 may be attained by a control program that is stored in the storage device 1002 and is operated by the processor 1001. Also, for example, the control unit 240 of the terminal 20 shown in FIG. 15 may be attained by a control program that is stored in the storage device 1002 and is operated by the processor 1001. It has been described that the various processing described above are executed by one processor 1001, but the various processing may be simultaneously or sequentially executed by two or more processors 1001. The processor 1001 may be mounted on one or more chips. Note that, the program may be transmitted from a network through an electric communication line.

The storage device 1002 is a computer readable recording medium, and for example, may be configured of at least one of a read only memory (ROM), an erasable programmable ROM (EPROM), an electrically erasable programmable ROM (EEPROM), a random access memory (RAM), and the like. The storage device 1002 may be referred to as a register, a cache, a main memory (a main storage unit), and the like. The storage device 1002 is capable of retaining a program (a program code), a software module, and the like that can be executed in order to implement a communication method according to one embodiment of this disclosure.

The auxiliary storage device 1003 is a computer readable recording medium, and for example, may be configured of at least one of an optical disk such as a compact disc ROM (CD-ROM), a hard disk drive, a flexible disk, a magnetooptical disk (for example, a compact disc, a digital versatile disk, and a Blu-ray (Registered Trademark) disc), a smart card, a flash memory (for example, a card, a stick, a key drive), a floppy (Registered Trademark) disk, a magnetic strip, and the like. The storage medium described above, for example, may be a database including at least one of the storage device 1002 and the auxiliary storage device 1003, a server, and a suitable medium.

The communication device 1004 is hardware (a transmitting and receiving device) for performing communication with respect to the computer through at least one of a wire network and a radio network, and for example, is also referred to as a network device, a network controller, a network card, a communication module, and the like. The communication device 1004, for example, may be configured by including a high frequency switch, a duplexer, a filter, a frequency synthesizer, and the like, in order to attain at least one of frequency division duplex (FDD) and time division duplex (TDD). For example, a transmitting and receiving antenna, an amplifier, a transmitting and receiving unit, a transmission path interface, and the like may be attained by the communication device 1004. In the transmitting and receiving unit, the transmitting unit and the receiving unit are mounted by being physically or logically separated.

The input device 1005 is an input device for receiving input from the outside (for example, a keyboard, a mouse, a microphone, a switch, a button, a sensor, and the like). The output device 1006 is an output device for implementing output with respect to the outside (for example, a display, a speaker, an LED lamp, and the like). Note that, the input device 1005 and the output device 1006 may be integrally configured (for example, a touch panel).

In addition, each of the apparatuses such as the processor 1001 and the storage device 1002 may be connected by the bus 1007 for performing communication with respect to information. The bus 1007 may be configured by using a single bus, or may be configured by using buses different for each of the apparatuses.

In addition, the base station 10 and the terminal 20 may be configured by including hardware such as a microprocessor, a digital signal processor (DSP), an application specific integrated circuit (ASIC), a programmable logic device (PLD), and a field programmable gate array (FPGA), and a part or all of the respective function blocks may be attained by the hardware. For example, the processor 1001 may be mounted by using at least one of the hardware.

The terminal 20 or the base station 10 may be provided in a vehicle. FIG. 15 shows a configuration example of a vehicle 2001 according to the present embodiment. As shown in FIG. 15, the vehicle 2001 includes a drive unit 2002, a steering unit 2003, an accelerator pedal 2004, a brake pedal 2005, a shift lever 2006, front wheels 2007, rear wheels 2008, an axle 2009, an electronic control unit 2010, various sensors 2021-2029, an information service unit 2012, and a communication module 2013. Each aspect/embodiment described in the present disclosure may be applied to a communication apparatus mounted on the vehicle 2001, and may be applied to, for example, the communication module 2013. The functions of the terminal 20 may be incorporated in the communication module 2013.

The drive unit 2002 may include, for example, an engine, a motor, and a hybrid of an engine and a motor. The steering unit 2003 includes at least a steering wheel and is configured to steer at least one of the front wheel and the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by the object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via the communication port 2033, to and from the drive unit 2002, the steering unit 2003, the accelerator pedal 2004, the brake pedal 2005, the shift lever 2006, the front wheels 2007, the rear wheels 2008, the axle 2009, the microprocessor 2031 and the memory (ROM, RAM) 2032 in the electronic control unit 2010, and sensors 2021-2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 transmits a current signal, which is input to the electronic control unit 2010 from the current sensor, to the external devices through radio communication. In addition, the communication module 2013 also transmits, to the external devices through radio communication, the front or rear wheel rotation signal acquired by the revolution sensor 2022, the front or rear wheel pneumatic signal acquired by the pneumatic sensor 2023, the vehicle speed signal acquired by the vehicle speed sensor 2024, the acceleration signal acquired by the acceleration sensor 2025, the stepped-on accelerator pedal signal acquired by the accelerator pedal sensor 2029, the stepped-on brake pedal signal acquired by the brake pedal sensor 2026, the operation signal of the shift lever acquired by the shift lever sensor 2027, and the detection signal, acquired by the object detection sensor 2028, for detecting an obstacle, a vehicle, a pedestrian, and the like, that are input to the electronic control unit 2010.

The communication module 2013 receives various types of information (traffic information, signal information, inter-vehicle information, etc.) transmitted from the external devices and displays the received information on the information service unit 2012 provided in the vehicle 2001. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheels 2007, the rear wheels 2008, the axle 2009, the sensors 2021-2029, etc., mounted in the vehicle 2001.

### (Supplement to Embodiment)

As described above, the embodiment of the invention has been described, but the disclosed invention is not limited to the embodiment, and a person skilled in the art will understand various modification examples, correction examples, alternative examples, substitution examples, and the like. Specific numerical examples have been described in order to facilitate the understanding of the invention, but the numerical values are merely an example, and any appropriate values may be used, unless otherwise specified. The classification of the items in the above description is not essential to the invention, and the listings described in two or more items may be used by being combined, as necessary, or the listing described in one item may be applied to the listing described in another item (insofar as there is no contradiction). A boundary between the functional parts or the processing parts in the function block diagram does not necessarily correspond to a boundary between physical components. The operations of a plurality of functional parts may be physically performed by one component, or the operation of one functional part may be physically performed by a plurality of components. In a processing procedure described in the embodiment, a processing order may be changed, insofar as there is no contradiction. For the convenience of describing the processing, the base station 10 and the terminal 20 have been described by using a functional block diagram, but such an apparatus may be attained by hardware, software, or a combination thereof. Each of software that is operated by a processor of the base station 10 according to the embodiment of the invention and software that is operated by a processor of the terminal 20 according to the embodiment of the invention may be retained in a random access memory (RAM), a flash memory, a read only memory (ROM), an EPROM, an EEPROM, a register, a hard disk (HDD), a removable disk, a CD-ROM, a database, a server, and other suitable recording media.

In addition, the notification of the information is not limited to the aspect/embodiment described in this disclosure, and may be performed by using other methods. For example, the notification of the information may be implemented by physical layer signaling (for example, downlink control information (DCI) and uplink control information (UCI)), higher layer signaling (for example, radio resource control (RRC) signaling, medium access control (MAC) signaling, broadcast information (a master information block (MIB)), a system information block (SIB)), other signals, or a combination thereof. In addition, the RRC signaling may be referred to as an RRC message, and for example, may be an RRC connection setup message, an RRC connection reconfiguration message, and the like.

Each aspect/embodiments described in this disclosure may be applied to a system using long term evolution (LTE), LTE-advanced (LTE-A), SUPER 3G, IMT-advanced, a 4th generation mobile communication system (4G), a 5th generation mobile communication system (5G), future radio access (FRA), new radio (NR), W-CDMA (Registered Trademark), GSM (Registered Trademark), CDMA2000, an ultra mobile broadband (UMB), IEEE 802.11 (Wi-Fi (Registered Trademark)), IEEE 802.16 (WiMAX (Registered Trademark)), IEEE 802.20, an ultra-wideband (UWB), Bluetooth (Registered Trademark), and other suitable systems and a next-generation system that is expanded on the basis thereof. In addition, a combination of a plurality of systems (for example, a combination of at least one of LTE and LTE-A and 5G, and the like) may be applied.

In the processing procedure, the sequence, the flowchart, and the like of each aspect/embodiment described herein, the order may be changed, insofar as there is no contradiction. For example, in the method described in this disclosure, the elements of various steps are presented by using an exemplary order, but are not limited to the presented specific order.

Here, a specific operation that is performed by the base station 10 may be performed by an upper node, in accordance with a case. In a network provided with one or a plurality of network nodes including the base station 10, it is obvious that various operations that are performed in order for communication with respect to the terminal 20 can be performed by at least one of the base station 10 and network nodes other than the base station 10 (for example, MME, S-GW, or the like is considered as the network node, but the network node is not limited thereto). In the above description, a case is exemplified in which the number of network nodes other than the base station 10 is 1, but a plurality of other network nodes may be combined (for example, the MME and the S-GW).

The information, the signal, or the like described in this disclosure can be output to a lower layer (or the higher layer) from the higher layer (or the lower layer). The information, the signal, or the like may be input and output through a plurality of network nodes.

The information or the like that is input and output may be retained in a specific location (for example, a memory), or may be managed by using a management table. The information or the like that is input and output can be subjected to overwriting, updating, or editing. The information or the like that is output may be deleted. The information or the like that is input may be transmitted to the other apparatuses.

Judgment in this disclosure may be performed by a value represented by 1 bit (0 or 1), may be performed by a truth-value (Boolean: true or false), or may be performed by a numerical comparison (for example, a comparison with a predetermined value).

Regardless of whether the software is referred to as software, firmware, middleware, a microcode, and a hardware description language, or is referred to as other names, the software should be broadly interpreted to indicate a command, a command set, a code, a code segment, a program code, a program, a sub-program, a software module, an application, a software application, a software package, a routine, a sub-routine, an object, an executable file, an execution thread, a procedure, a function, and the like.

In addition, software, a command, information, and the like may be transmitted and received through a transmission medium. For example, in a case where the software is transmitted from a website, a server, or other remote sources by using at least one of a wire technology (a coaxial cable, an optical fiber cable, a twisted pair, a digital subscriber line (DSL), and the like) and a radio technology (an infrared ray, a microwave, and the like), at least one of the wire technology and the radio technology is included in the definition of the transmission medium.

The information, the signal, and the like described in this disclosure may be represented by using any of various different technologies. For example, the data, the command, the information, the signal, the bit, the symbol, the chip, and the like that can be referred to through the entire description described above may be represented by a voltage, a current, an electromagnetic wave, a magnetic field or magnetic particles, an optical field or a photon, or an arbitrary combination thereof.

Note that, the terms described in this disclosure and the terms necessary for understanding this disclosure may be replaced with terms having the same or similar meaning. For example, at least one of the channel and the symbol may be a signal (signaling). In addition, the signal may be a message. In addition, a component carrier (CC) may be referred to as a carrier frequency, a cell, a frequency carrier, and the like.

The terms "system" and "network" used in this disclosure are interchangeably used.

In addition, the information, the parameter, and the like described in this disclosure may be represented by using an absolute value, may be represented by using a relative value from a predetermined value, or may be represented by using another corresponding piece of information. For example, a radio resource may be indicated by an index.

The names used in the parameters described above are not a limited name in any respect. Further, expressions or the like using such parameters may be different from those explicitly disclosed in this disclosure. Various channels (for example, PUCCH, PDCCH, and the like) and information elements can be identified by any suitable name, and thus, various names that are allocated to such various channels and information elements are not a limited name in any respect.

In this disclosure, the terms "base station (BS)", "radio base station", "base station", "fixed station", "NodeB", "eNodeB (eNB)", "gNodeB (gNB)", "access point", "transmission point", "reception point", "transmission and reception point", "cell", "sector", "cell group", "carrier", "component carrier", and the like can be interchangeably used. The base station may be referred to by a term such as a macro-cell, a small cell, a femtocell, and a picocell.

The base station is capable of accommodating one or a plurality of (for example, three) cells. In a case where the base station accommodates a plurality of cells, the entire coverage area of the base station can be classified into a plurality of small areas, and each of the small areas is capable of providing communication service by a base station sub-system (for example, an indoor type small base station (a remote radio head (RRH)). The term "cell" or "sector" indicates a part of the coverage area or the entire coverage area of at least one of the base station and the base station sub-system that perform the communication service in the coverage.

In this disclosure, the terms "mobile station (MS)", "user terminal", "user equipment (UE)", and "terminal" can be interchangeably used.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or other suitable terms, by a person skilled in the art.

At least one of the base station and the mobile station may be referred to as a transmitting apparatus, a receiving apparatus, a communication apparatus, and the like. Note that, at least one of the base station and the mobile station may be a device that is mounted on a mobile object, the mobile object itself, or the like. The mobile object may be a vehicle (for example, a car, an airplane, and the like), may be a mobile object that is moved in an unmanned state (for example, a drone, an autonomous driving car, and the like), or may be a (manned or unmanned) robot. Note that, at least one of the base station and the mobile station also includes an apparatus that is not necessarily moved at the time of a communication operation. For example, at least one of the base station and the mobile station may be an internet of things (IoT) device such as a sensor.

In addition, the base station in this disclosure may be replaced with the terminal. For example, each aspect/embodiment of this disclosure may be applied to a configuration in which communication between the base station and the user terminal is replaced with communication in a plurality of terminals 20 (for example, may be referred to as device-to-device (D2D), vehicle-to-everything (V2X), and the like). In this case, the function of the base station 10 described above may be provided in the terminal 20. In addition, the words "uplink", "downlink", and the like may be replaced with words corresponding to the communication between the terminals (for example, "side"). For example, an uplink channel, a downlink channel, and the like may be replaced with a side channel.

Similarly, the user terminal in this disclosure may be replaced with the base station. In this case, the function of the user terminal described above may be provided in the base station.

The terms "determining" used in this disclosure may involve diverse operations. "Determining", for example, may include deeming judging, calculating, computing, processing, deriving, investigating, looking up (search, inquiry) (for example, looking up in a table, a database, or another data structure), and ascertaining, as "determining" and "determining". In addition, "determining" and "determining" may include deeming receiving (for example, receiving information), transmitting (for example, transmitting information), input, output, and accessing (for example, accessing data in a memory), as "determining". In addition, "determining" and "determining" may include deeming resolving, selecting, choosing, establishing, comparing, and the like as "determining" and "determining". That is, "determining" and "determining" may include deeming an operation as "determining" and "determining". In addition, "determining (determining)" may be replaced with "assuming", "expecting", "considering", and the like.

The terms "connected" and "coupled", or any modification thereof indicate any direct or indirect connection or couple in two or more elements, and are capable of including a case where there are one or more intermediate elements between two elements that are "connected" or "coupled" to each other. The couple or connection between the elements may be physical or logical, or may be a combination thereof. For example, the "connection" may be replaced with "access". In the case of being used in this disclosure, it is possible to consider that two elements are "connected" or "coupled" to each other by using at least one of one or more electric wires, cables, and print electric connection, and as some nonlimiting and non-inclusive examples, by using electromagnetic energy having a wavelength of a radio frequency domain, a microwave domain, and an optical (visible and invisible) domain, and the like.

The reference signal can also be abbreviated as RS, and may be referred to as pilot based on a standard to be applied.

The description "based on" that is used in this disclosure does not indicate only "based on only", unless otherwise specified. In other words, the description "based on" indicates both "based on only" and "based on at least".

Any reference to elements using the designations "first," "second," and the like, used in this disclosure, does not generally limit the amount or the order of such elements. Such designations can be used in this disclosure as a convenient method for discriminating two or more elements. Therefore, a reference to a first element and a second element does not indicate that only two elements can be adopted or the first element necessarily precedes the second element in any manner.

"Means" in the configuration of each of the apparatuses described above may be replaced with "unit", "circuit", "device", and the like.

In this disclosure, in a case where "include", "including", and the modification thereof are used, such terms are intended to be inclusive, as with the term "comprising". Further, the term "or" that is used in this disclosure is not intended to be exclusive-OR.

A radio frame may be configured of one or a plurality of frames in a time domain. Each of one or a plurality of frames in the time domain may be referred to as a subframe. The subframe may be further configured of one or a plurality of slots in the time domain. The subframe may be a fixed time length (for example, 1 ms) that does not depend on numerology.

The numerology may be a communication parameter to be applied to at least one of the transmission and the reception of a certain signal or channel. The numerology, for example, may indicate at least one of subcarrier spacing (SCS), a bandwidth, a symbol length, a cyclic prefix length, a transmission time interval (TTI), the number of symbols per TTI, a radio frame configuration, specific filtering processing that is performed by the transceiver in a frequency domain, specific windowing processing that is performed by the transceiver in a time domain, and the like.

The slot may be configured of one or a plurality of symbols (an orthogonal frequency division multiplexing (OFDM) symbol, a single carrier frequency division multiple access (SC-FDMA) symbol, and the like) in a time domain. The slot may be time unit based on the numerology.

The slot may include a plurality of mini slots. Each of the mini slots may be configured of one or a plurality of symbols in the time domain. In addition, the mini slot may be referred to as a subslot. The mini slot may be configured of symbols of which the number is less than that of the slot. PDSCH (or PUSCH) to be transmitted in time units greater than the mini slot may be referred to as a PDSCH (or PUSCH) mapping type A. PDSCH (or PUSCH) to be transmitted by using the mini slot may be referred to as a PDSCH (or PUSCH) mapping type B.

All of the radio frame, the subframe, the slot, the mini slot, and the symbol represent time units at the time of transmitting a signal. Other names respectively corresponding to the radio frame, the subframe, the slot, the mini slot, and the symbol may be used.

For example, one subframe may be referred to as a transmission time interval (TTI), a plurality of consecutive subframes may be referred to as TTI, or one slot or one mini slot may be referred to as TTI. That is, at least one of the subframe and TTI may be a subframe (1 ms) in the existing LTE, may be a period shorter than 1 ms (for example, 1 to 13 symbols), or may be a period longer than 1 ms. Note that, a unit representing TTI may be referred to as a slot, a mini slot, and the like, but not a subframe. Also, one slot may be referred to as a unit time. The unit time may differ for each cell according to the numerology.

Here, TTI, for example, indicates a minimum time unit of scheduling in radio communication. For example, in an LTE system, the base station performs scheduling for allocating a radio resource (a frequency bandwidth, transmission power, and the like that can be used in each of the terminals 20) in TTI units, with respect to each of the terminals 20. Note that, the definition of TTI is not limited thereto.

TTI may be a transmission time unit of a data packet (a transport block), a code block, a codeword, and the like that are subjected to channel coding, or may be processing unit of scheduling, link adaptation, and the like. Note that, when TTI is applied, a time section (for example, the number of symbols) in which the transport block, the code block, the codeword, and the like are actually mapped may be shorter than TTI.

Note that, in a case where one slot or one mini slot is referred to as TTI, one or more TTIs (that is, one or more slots or one or more mini slots) may be the minimum time unit of the scheduling. In addition, the number of slots (the number of mini slots) configuring the minimum time unit of the scheduling may be controlled.

TTI having a time length of 1 ms may be referred to as a normal TTI (TTI in LTE Rel.8-12), a normal TTI, a long TTI, a normal subframe, a normal subframe, a long subframe, a slot, and the like. TTI shorter than the normal TTI may be referred to as a shortened TTI, a short TTI, a partial TTI (or a fractional TTI), a shortened subframe, a short subframe, a mini slot, a subslot, a slot, and the like.

Note that, the long TTI (for example, the normal TTI, the subframe, and the like) may be replaced with TTI having a time length of greater than or equal to 1 ms, and the short TTI (for example, the shortened TTI and the like) may be replaced with TTI having a TTI length of less than a TTI length of the long TTI and greater than or equal to 1 ms.

The resource block (RB) is a resource allocation unit of the time domain and the frequency domain, and may include one or a plurality of consecutive subcarriers in the frequency domain. The number of subcarriers included in RB may be the same regardless of the numerology, or for example, may be 12. The number of subcarriers included in RB may be determined based on the numerology.

In addition, the time domain of RB may include one or a plurality of symbols, or may be the length of one slot, one mini slot, one subframe, or one TTI. One TTI, one subframe, and the like may be respectively configured of one or a plurality of resource blocks.

Note that, one or a plurality of RBs may be referred to as a physical resource block (physical RB: PRB), a subcarrier group (SCG), a resource element group (REG), a PRB pair, an RB pair, and the like.

In addition, the resource block may be configured of one or a plurality of resource elements (RE). For example, one RE may be a radio resource domain of one subcarrier and one symbol.

A bandwidth part (BWP) (may be referred to as a part bandwidth or the like) may represent a subset of consecutive common resource blocks (common RBs) for certain numerology, in a certain carrier. Here, the common RB may be specified by an index of RB based on a common reference point of the carrier. PRB may be defined by a certain BWP, and may be numbered within BWP.

BWP may include BWP for UL (UL BWP) and BWP for DL (DL BWP). In UE, one or a plurality of BWPs may be configured within one carrier.

At least one of the configured BWPs may be active, and it need not be assumed that the UE transmits and receives a predetermined signal/channel out of the active BWP. Note that, the "cell", the "carrier", and the like in this disclosure may be replaced with "BWP".

The structure of the radio frame, the subframe, the slot, the mini slot, the symbol, and the like, described above, is merely an example. For example, the configuration of the number of subframes included in the radio frame, the number of slots per a subframe or a radio frame, the number of mini slots included in the slot, the number of symbols and RBs included in the slot or a mini slot, the number of subcarriers included in RB, the number of symbols in TTI, a symbol length, a cyclic prefix (CP) length, and the like can be variously changed.

In this disclosure, for example, in a case where articles such as a, an, and the are added by translation, this disclosure may include a case where nouns following the articles are plural.

In this disclosure, the term "A and B are different" may indicate "A and B are different from each other". Note that, the term may indicate "A and B are respectively different from C". The terms "separated", "coupled", and the like may be interpreted as with "being different".

Each aspect/embodiment described in this disclosure may be independently used, may be used by being combined, or may be used by being switched in accordance with execution. In addition, the notification of predetermined information (for example, the notification of "being X") is not limited to being performed explicitly, and may be performed implicitly (for example, the notification of the predetermined information is not performed).

As described above, this disclosure has been described in detail, but it is obvious for a person skilled in the art that this disclosure is not limited to the embodiment described in this disclosure. This disclosure can be implemented as corrected and modified without departing from the spirit and scope of this disclosure defined by the description of the claims. Therefore, the description in this disclosure is for illustrative purposes and does not have any limiting meaning with respect to this disclosure.

### Description of Symbols

10 base station
110 transmission unit
120 reception unit
130 configuration unit
140 control unit
20 terminal
210 transmission unit
220 reception unit
230 configuration unit
240 control unit
1001 processor
1002 storage device
1003 auxiliary storage device
1004 communication device
1005 input device
1006 output device
2001 vehicle
2002 drive unit
2003 steering unit
2004 accelerator pedal
2005 brake pedal
2006 shift lever
2007 front wheels
2008 rear wheels
2009 axle
2010 electronic control unit
2012 information service unit
2013 communication module
2021 current sensor
2022 revolution sensor
2023 pneumatic sensor
2024 vehicle speed sensor
2025 acceleration sensor
2026 brake pedal sensor
2027 shift lever sensor
2028 object detection sensor
2029 accelerator pedal sensor
2030 driving support system unit
2031 microprocessor
2032 memory (ROM, RAM)
2033 communication port (IO port)

## Claims

1. A terminal comprising:
a reception unit configured to receive, from a base station, first information indicating a slot to monitor in a slot group; and
a control unit configured, when the reception unit receives second information indicating a duration, to monitor a downlink control channel at a slot indicated by the first information in the duration indicated by the second information.

2. The terminal as claimed in claim 1,
wherein the duration varies depending on a type of a search space configured to the terminal.

3. The terminal as claimed in claim 1 or 2,
wherein, when the reception unit does not receive the second information, the control unit applies, as the duration, a time length of a number of slots constituting the slot group.

4. The terminal as claimed in any one of claims 1 to 3,
wherein the first information indicates a slot to which a search space is applied in the slot group.

5. The terminal as claimed in any one of claims 1 to 4,
wherein the first information is a bitmap of a bit length, and wherein, when a number of slots in the slot group is smaller than the bit length, the control unit uses a part of the bitmap.

6. A base station comprising:
a transmission unit configured to transmit first information indicating a slot for a terminal to monitor in a slot group, and second information indicating a duration; and
a control unit configured to determine transmitting a downlink control channel at a slot indicated by the first information in a duration indicated by the second information.
